Europäisches Patentamt

European Patent Office

Office européen des brevets

(11) Publication number: 0 496 377 A1

# EUROPEAN PATENT APPLICATION

(21) Application number: 92101006.2

(22) Date of filing: 22.01.92

(51) Int. Cl.⁵: B42D 15/08, B32B 7/06

(30) Priority: 23.01.91 JP 26036/91

(43) Date of publication of application:
29.07.92 Bulletin 92/31

(84) Designated Contracting States:
DE FR GB IT

(71) Applicant: KABUSHIKI KAISHA CHALLENGE
FIVE
1-2-17, Kitahorie Nishi-ku
Osaka-shi(JP)

(72) Inventor: Shibahara, Kenji
c/o. K. K. Challenge Five 1-2-17 Kitahorie
Nishi-ku Osaka-shi(JP)

(74) Representative: Reinhard, Skuhra, Weise
Friedrichstrasse 31
W-8000 München 40(DE)

(54) Laminated film for being interposed in a sheet of paper.

(57) A laminated film for being interposed in a sheet of paper interposed in inner surfaces of a postcard, envelope or the like on which information or the like is shown and bonded to each other, or the laminated film is bonded to inner surfaces of a fold type catalogue, pamphlet or the like for actual use. A postcard, envelope, catalogue or the like using the film can be easily torn into pieces for disposal. And in particular a postcard using the film can be successively and automatically manufactured since a synthetic resin film comprising the laminated film can be torn apart.

FIG.1

## BACKGROUND OF THE INVENTION

### FIELD OF THE INVENTION:

The present invention relates to a laminated film for being interposed in a sheet of paper, more particularly the present invention relates to a laminated film for being interposed in a sheet of paper, in which the laminated film is interposed in inner surfaces of a postcard, envelope or the like on which information or the like is shown being separably bonded by, e.g., heating and bonded to each other, or the laminated film is bonded to inner surfaces of a fold type catalogue, pamphlet or the like for mailing the information such as correspondence or printing medium in a concealed state.

### DESCRIPTION OF THE RELATED ART:

In the prior art, there are such kinds of a laminated film interposed in the sheets of a postcard, for example, in Japanese Patent Laid-Open No. 64-16691, and the like.

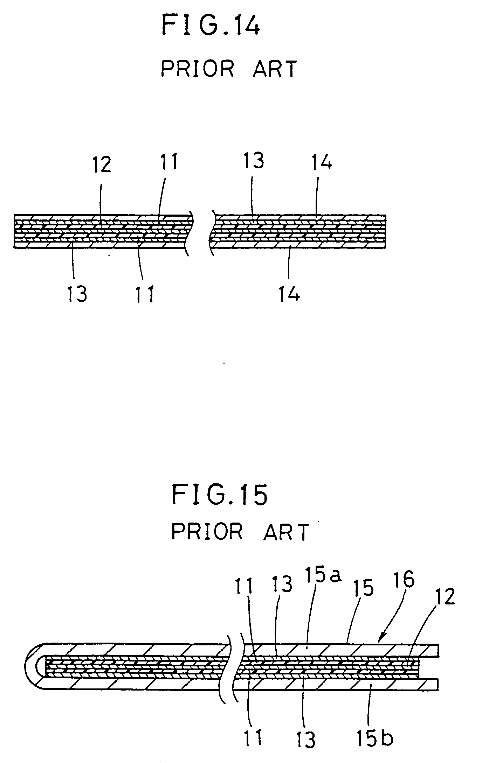

The laminated film in accordance with such a conventional structure comprises a pseudo adhesive layer 12 interposed between two films 11, adhesives 13 respectively coated on each inner side of the films 11 and sheets of released paper 14 respectively arranged on each outer side of the adhesives 13 as shown in Fig. 14..

This type of the laminated film is used in a manner that both sheets of released paper 14 are released therefrom at first and interposed between two sheet portions 15a and 15b of a twice-folded postcard body 15 in order to form a postcard 16 for actual use as shown in Fig. 15.

However, since the laminated film in accordance with the above structure is of a regular size in dimension including the sheets of released paper provided on both sides of a laminated layers of the films 11, the adhesives 13 or the like, the sheets of released paper 14 must be respectively interposed in each sheet portion of a postcard and bonded thereto. Therefore, there are the problems of difficulty in which the operation for manufacturing a postcard can not be successively and automatically completed.

On the other hand, the laminated film may be made in a continuous form in a manufacturing step such that the postcard can be successively and automatically manufactured using a lengthwise sheet. However, it requires a cutting of the process for the lengthwise sheet.

However, since the laminated film includes the synthetic resin films 11, the films 11 cause a trouble in the cutting operation of the process even if the laminated film is made in the continuous form and interposed in the lengthwise sheets. Accordingly, it is difficult to introduce the continuously-manufacturing operation using the lengthwise sheet in manufacturing the postcard including the laminated film.

Moreover, when this type of postcard is disposed of by being torn into pieces, it is difficult to be disposed of since the communication medium cannot be torn easily owing to the films interposed in the sheets. And when the communication medium including confidential information or the like is torn into small pieces for disposal, this operation must be performed by separately preparing a cutting tool such as scissors, which is very troublesome.

In any case, the above-described films are interposed in the sheets of the conventional postcards, and there are therefore the problem of difficulty in cutting the postcard at the time of disposal as well as the cutting operation of the process using the lengthwise sheet.

## SUMMARY OF THE INVENTION

In view of the above-described problems, an object of the present invention is to provide a postcard which can be successively and automatically manufactured although a synthetic resin film is provided therein, and which can be torn apart easily for disposal.

To achieve this object, according to the present invention, there is provided a laminated film for being interposed in a sheet of paper having at least two sheet portions which can be folded such that the inside each-other-facing surfaces of the sheet portions are separably bonded to each other through the laminated film, wherein at least one surface of the laminated film is formed as an adhesive surface which can be separably bonded to at least one of the sheet portions, and the laminated film includes a synthetic resin film which can be torn apart.

The present invention in accordance with the other structure provides a laminated film for being interposed in a sheet of paper having at least two sheet portions which can be folded such that the inside each-other-facing surfaces of the sheet portions are separably bonded to each other through the laminated film, wherein one surface of the laminated film is formed as an adhesive surface which can be inseparably bonded to the one sheet portion, the other surface of the laminated film is formed as an adhesive surface which can be separably bonded to the other sheet portion, and the laminated film includes the synthetic resin film which can be torn apart.

There is one structure comprising a synthetic resin film which can be torn apart, a synthetic resin layer which is applied on a surface of the film through a strong adhesive, the other synthetic resin layer which is applied on the other surface of the film through a weak adhesive.

Further, the present invention in accordance with the other structure provides a laminated film for being interposed in a sheet of paper having at least two sheet portions which can be folded such that the inside each-other-facing surfaces of the sheet portions are separably bonded to each other through the laminated film, wherein both surfaces of the laminated film are formed as adhesive surfaces which can be inseparably bonded to the sheet portions, the laminated film includes two synthetic resin films which can be torn apart, and the two synthetic resin films are separably bonded to each other.

One embodiment of the above structure comprises two synthetic resin films which can be torn apart, a weak adhesive which is interposed between the films and synthetic resin layers which are respectively applied on each outer surface of the films through strong adhesives.

Since the laminated film in accordance with the present invention includes the film which can be torn apart, when a postcard is manufactured using this type of film, the laminated film is made in a continuous form at first and the film is interposed in inner surfaces of the lengthwise sheet having portions forming postcards or in inner surfaces of the sheets forming a regular-sized postcard and bonded to each other. Thus the laminated film which is made in a continuous form can be easily torn apart by a tension force or the like without using a machine, tool or the like.

In addition to that, the postcard manufactured in accordance with the above manner can be easily torn apart because it includes the film which can be torn apart.

Therefore, this type of postcard can be easily torn into pieces for disposal after information shown on the surface of the postcard has been read, since the film can be easily torn apart.

These and other objects, features and advantages of the present invention will become clear when reference is made to the following description of the preferred embodiments of the present invention, together with reference to the accompanying drawings.

BRIEF DESCRIPTION OF THE DRAWING

Fig. 1 is a top plan view showing a laminated film according to an embodiment of the present invention with an intermediate section of the laminated film being omitted;
Fig. 2 is an enlarged sectional view taken along the line A-A of Fig. 1 with an intermediate section being omitted;

Fig. 3(a) is a front view of a sheet forming a postcard;
Fig. 3(b) is a rear view of a sheet forming a postcard;
Fig. 4 is a schematic top plan view showing a state in which the laminated film is transfered to the sheet forming a postcard;
Fig. 5 is a schematic top plan view showing a state in which the sheet forming a postcard is twice folded;
Fig. 6 is a schematic top plan view showing a state in which a sheet portion forming a postcard is cut;
Fig. 7 is a front view of a manufactured postcard;
Fig. 8 is a rear view of a manufactured postcard;
Fig. 9 is an enlarged sectional view taken along the line B-B of Fig. 7 with an intermediate section being omitted;
Fig. 10(a) is a front view showing a state in which a postcard is opened;
Fig. 10(b) is an enlarged sectional view taken along the line C-C of Fig. 10(a) with an intermediate section being omitted;
Fig. 11 is an enlarged sectional view of a laminated film according to the other embodiment with an intermediate section being omitted;
Fig. 12 is an enlarged sectional view of a postcard using the laminated film according to Fig. 11 with an intermediate section being omitted;
Fig. 13 is an enlarged sectional view showing a state in which the postcard accroding to Fig. 12 is opened with an intermediate section being omitted;
Fig. 14 is an enlarged sectional view of the conventional laminated film with an intermediated section being omitted;
Fig. 15 is an enlarged sectional view of a postcard using the laminated film according to Fig. 14 with an intermediate section being omitted;

DESCRIPTION OF THE PREFERRED EMBODIMENTS

Embodiments of the present invention will be described hereinafter accompanying with the drawings.

Embodiment 1

This embodiment relates to a laminated film for being interposed in sheet portions of a postcard as an example of a sheet of paper.

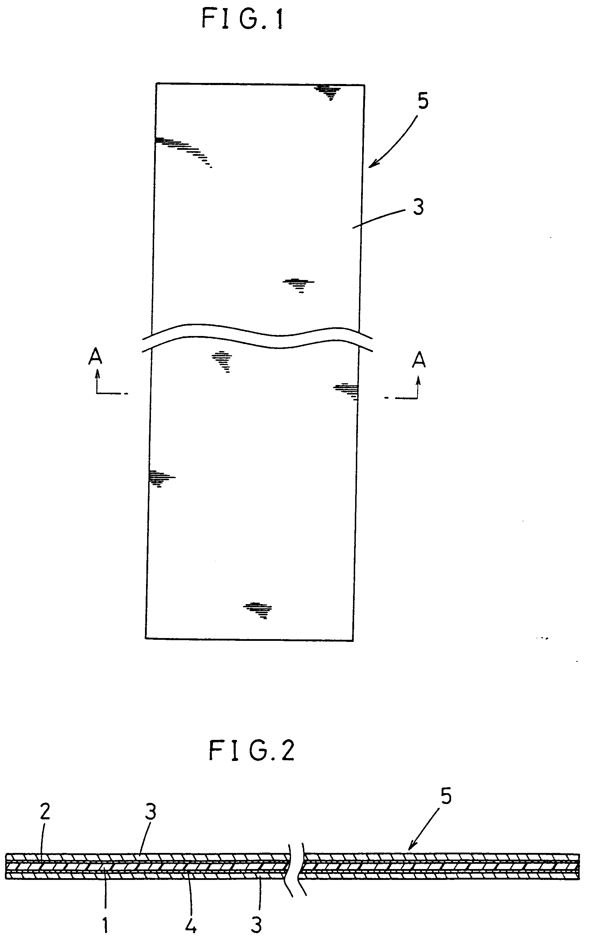

In Figs. 1 and 2, a biaxially oriented polypropylene film 1 [Product name: Pylen Film - ET (Toyobo Co., Ltd.)] is made in a continuous form and can be torn in one direction. One surface of the film 1 is provided thereon with a synthetic resin layer 3 made of ethylene-polyvinyl acetate copolymer resin through a strong adhesive and the other surface of the film 1 is provided thereon with a synthetic resin layer 3 made of ethylene-polyvinyl acetate copolymer resin through a weak adhesive 4.

The laminated film 5 in accordance with the above structure is used upon being interposed in a twice-folded postcard or the like.

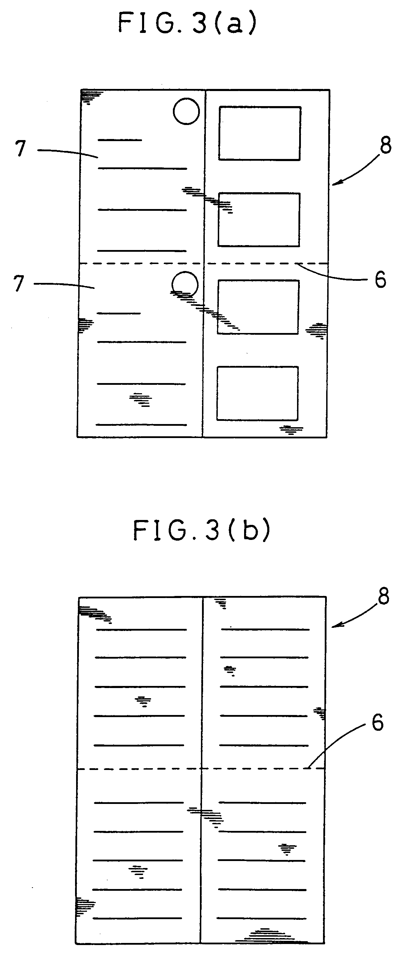

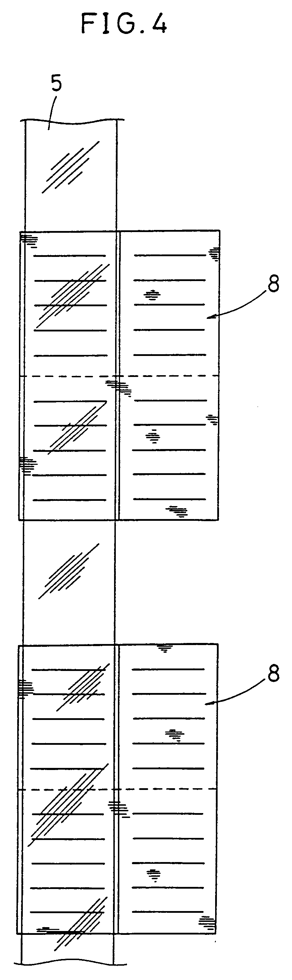

The detailed description of the operation for the insertion of the laminated film 5 is described hereinafter. A plurality of regular-sized sheets 8 forming postcards which are continuously connected to each other through perforations 6 are prepared as shown in Fig. 3. and desirable information is printed thereon by a laser printer or the like. The printed sheet 8 forming a postcard is transfered in a manner as shown in Fig. 4 and the laminated film 5 made of five layers as shown in Figs. 1 and 2 which is made in a continuous form and transfered onto the one side portion of the sheet 8 forming a postcard as shown in Fig. 4.

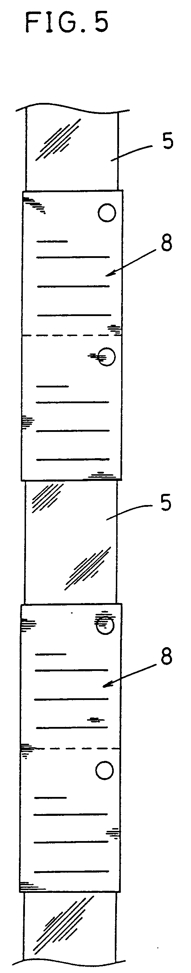

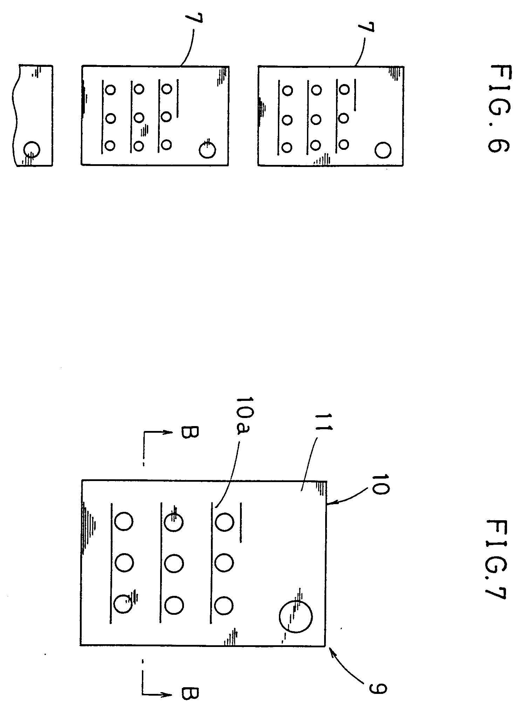

The sheet 8 forming a postcard is twice folded in the longitudinal direction thereof and bonded to the laminated film 5 by heat as shown in Fig. 5. Then the laminated film 5 is respectively torn into a portion of a sheet 8 forming a postcard and the sheet 8 forming a postcard is splitted at the position of perforations 6 while tearing the laminated film 5 as shown in Fig. 6.

In the above case, since the sheet 8 forming a postcard is provided with the perforations 6 therein, it can be easily splitted into each sheet portion 7 of a postcard at the position of perforations 6 by a tension force. Moreover, since the laminated film 5 includes a film made of a biaxially oriented polypropylene, which can be torn in one direction, the sheet 8 forming a postcard including the laminated film 5 can be easily torn apart at the position of the perforations 6 by the tension force.

Therefore, it is not necessary to prepare cutting means separately, and the postcard can be successively and automatically manufactured although the postcard includes the film.

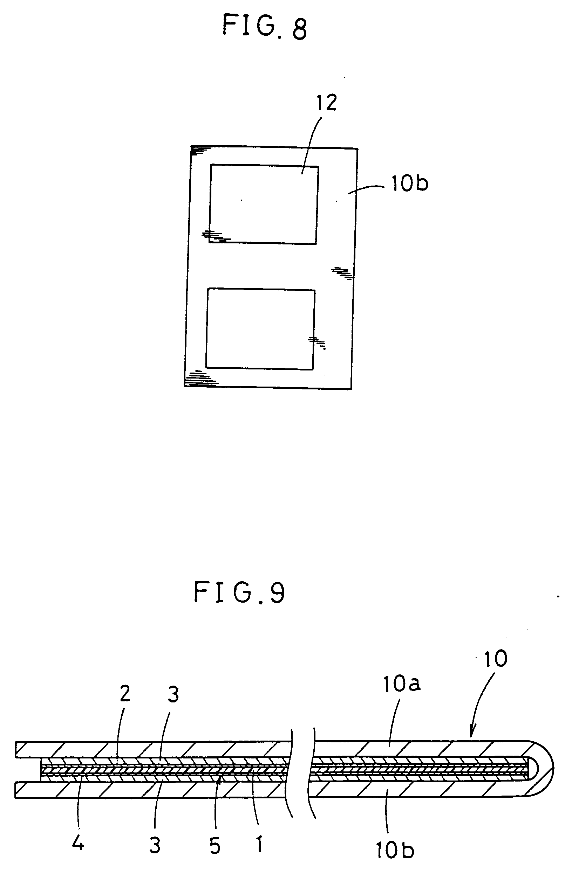

The structure of a postcard 9 being manufactured in accordance with the above manner will be described hereinafter. A postcard body 10 comprises two sheet portions 10a and 10b which can be twice folded as shown in Figs. 7 to 9. The outer surface of the sheet 10a is provided thereon with a name and address section 11 and a name and adress are shown by a printing. And the outer surface of the sheet portion 10b is provided thereon with an advertisement section 12.

Moreover, the inner surfaces of both sheet portions 10a and 10b are respectively provided thereon with information display sections 13. The sheet portions 10a and 10b are twice folded and the laminated film 5 is interposed therein.

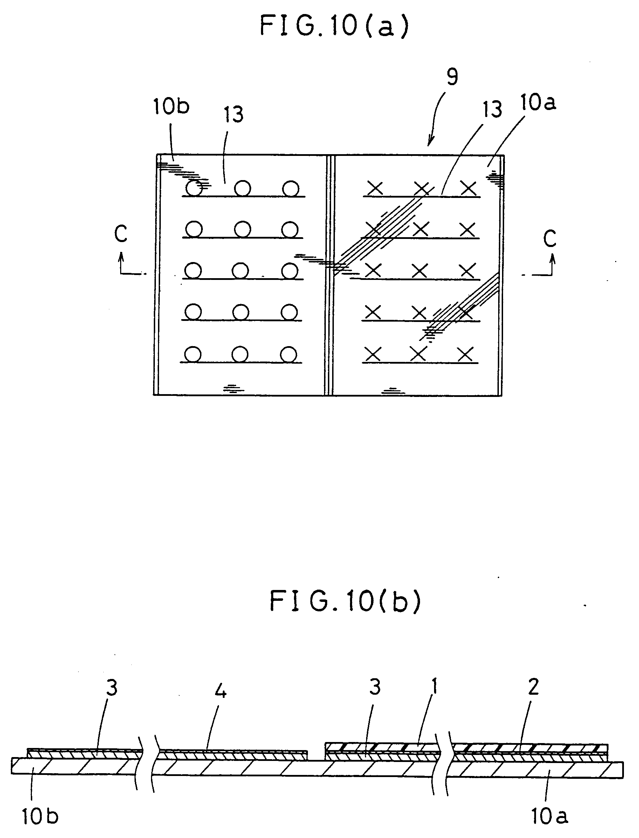

Since an interlaminar peeling takes place between the film 1 and the weak adhesive 4, the postcard in accordance with above structure can be easily opened by means of peeling the sheet portion 10a from the sheet portion 10b as shown in Fig. 10(b). Thus the information shown on the information display sections 13 can be easily read.

Moreover, when the postcard is disposed of in a opened state, since the film 1 comprising the laminated film 5 interposed within the postcard body 10 is made of a biaxially oriented polypropylene film which can be torn in one direction, it can be easily disposed of by means of tearing it in a transverse direction to the transfer direction thereof.

Embodiment 2

This is another embodiment relating to a laminated film for being interposed in sheet portions of a postcard.

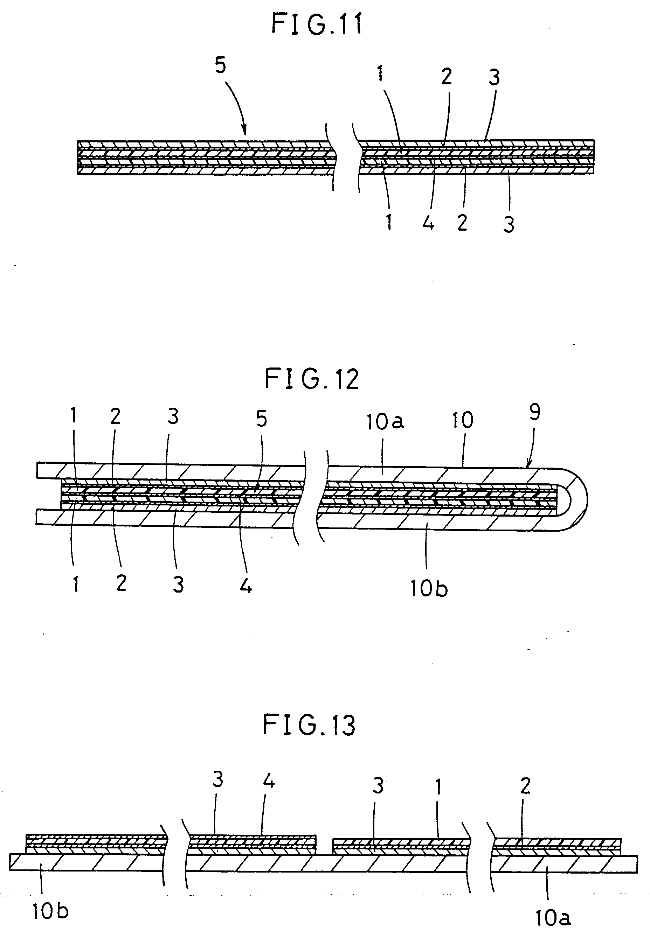

The laminated film 5 in accordance with this embodiment includes two biaxially oriented polypropylene films 1 which can be torn in one direction as shown in Fig. 11 and the weak adhesive 4 is interposed in the films 1. Each outer surface of the films 1 is respectively provided thereon with the synthetic resin layers 3 made of ethylene-polyvinyl acetate copolymer resin through the strong adhesives 2.

The laminated film 5 in accordance with the above structure is interposed within the twice-folded postcard body 10 and the postcard 9 is opened by means of the effect of the interlaminar peeling between the weak adhesive 4 and the films 1.

Other embodiments

In the above-described embodiments, a biaxially oriented polypropylene film which can be torn in one direction is used for the material of the film 1 comprising the laminated film 5, but the kind of film 1 is not limited to this. For example, a uniaxial oriented polypropylene film can be used for this purpose. Essentially, any film can be used so long as it can be torn apart.

However, the above-mentioned biaxially oriented polypropylene which can be torn in one direction is most preferable if the strength necessary at the time of working for manufacturing the postcard, the gloss for attracting the attention of a person unsealing the card, and other factors are considered.

In the above-described embodiments, an ethylene-polyvinyl acetate copolymer resin is used for the material of the synthetic resin layer 3 for bonding the film 1 to the inner surface of the postcard body 10, but the kind of material of the synthetic resin layer 3 is not limited to this, and it can be selected from other synthetic resins. Further, the film 1 may be bonded to the inner surface of the postcard body 10 by an adhesive.

The means for bonding the inner surfaces of the sheet portions of the postcard body 10 is not limited to the heating means in the above-described embodiments. The sheet portions can be bonded by only being pressurized. In this case, a cold melt bondig agent can be used.

The form of the postcard 9 is not limited to a state in which the postcard 9 is twice folded as described in the above embodiment. For example, it can be folded in three.

In the above-described embodiments, the strong adhesive 2, the weak adhesive 4 or the like are provided between the film 1 and the synthetic resin layer 3 such that the interlaminar peeling takes place between the film 1 and the weak adhesive 4, and the postcard can be opened thereby. However, the structure of the interlaminar peeling is not limited to this. For example, corona treatment or the like can be applied in either manner in which the film 1 can be separably bonded to the synthetic resin layer 3 or inseparably bonded thereto.

In the present invention, the necessary conditions are that the laminated film 5 including the one film 1 has one surface of the film 1 which is formed as an adhesive surface for being inseparably bonded to a surface of the sheet and another surface of the film 1 which is formed as an adhesive surface for being separably bonded to other surface of the sheet, and that the laminated film 5 including the two films 2 is formed in a manner in which the inner surfaces of the films 1 are respectively and separably bonded to each other and the outer surfaces of the films 1 are formed as adhesive surfaces for being inseparably bonded to the both sheets.

The application of a laminated film for being interposed into sheets of paper in accordance with the present invention is not limited to a postcard in the above-described embodiments. For example, it is possible to be applied to an envelope for a direct mail,catalogue, pamphlet or the like.

In accordance with the present invention, as described above, since a film can be torn apart, when a postcard is manufactured using the films which are laminated, the films are interposed between the sheet portions forming the communication medium and the inner surfaces of the sheet are bonded to each other through the film. The bonded sheet is thereafter torn at the positions in accordance with the predetermined size of a postcard such that the film can be easily torn in the transverse direction of the communication medium member.

Accordingly, if a splitting means such as perforations is provided in the sheet, the sheet can be split while tearing the film. There is no need to provide special cutting machine.

It is therefore possible to manufacture communication mediums successively and automatically from a sheet of paper like a continuous form and a lengthwise film without making the overall construction of the manufacture apparatus complicated.

Since the interposed film can be torn in one direction as mentioned above, the communication medium can easily be torn such that the film interposed therein is simultaneously torn apart, when the communication medium is torn to pieces and thrown away. The disposal operation is therefore easier than that for the conventional postcards, even though the film is interposed.

Moreover, since the laminated film is the laminated structue of the film which can be torn apart which causes the interlaminar peeling therein, it can be broadly applied to an information display medium such as an envelope for a direct mail, catalogue, pamphlet or the like other than the above-described postcard. Thus these mediums can be easily thrown away after used as in the case of a postcard.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

A laminated film for being interposed in a sheet of paper interposed in inner surfaces of a postcard, envelope or the like on which information or the like is shown and bonded to each other, or the laminated film is bonded to inner surfaces of a fold type catalogue, pamphlet or the like for actual use. A postcard, envelope, catalogue or the like using the film can be easily torn into pieces for disposal. And in particular a postcard using the film can be successively and automatically manufactured since a synthetic resin film comprising the laminated film can be torn apart.

**Claims**

1. A laminated film for being interposed in a sheet of paper having at least two sheet portions which can be folded such that the inside each-other-facing surfaces of said sheet portions are separably bonded to each other through said laminated film, wherein at least one surface of said laminated film is formed as an adhesive surface which can be separably bonded to at least one of said sheet portions, and said laminated film includes a synthetic resin film which can be torn apart.

2. A laminated film for being interposed in a sheet of paper having at least two sheet portions which can be folded such that the inside each-other-facing surfaces of said sheet portions are separably bonded to each other through said laminated film, wherein one surface of said laminated film is formed as an adhesive surface which can be inseparably bonded to the one sheet portion, the other surface of the laminated film is formed as an adhesive surface which can be separably bonded to the other sheet portion, and said laminated film includes said synthetic resin film which can be torn apart.

3. A laminated film for being interposed in a sheet of paper having at least two sheet portions which can be folded such that the inside each-other-facing surfaces of said sheet portions are separably bonded to each other through said laminated film comprising;

said synthetic resin film which can be torn apart,

a synthetic resin layer which is provided on one surface of the film through a strong adhesive; and

a synthetic resin layer which is provided on the other surface of the film through an weak adhesive.

4. A laminated film for being interposed in a sheet of paper as set forth in one of claims 1 to 3, wherein said film which can be torn apart is a biaxialy oriented polypropylene film which can be torn in one direction.

5. A laminated film for being interposed in a sheet of paper as set forth in one of claim 3 or 4, wherein said synthetic resin layer is formed of an ethylene-polyvinyl acetate copolymer resin.

6. A laminated film for being interposed in a sheet of paper having at least two sheet portions which can be folded such that the inside each-other-facing surfaces of said sheet portions are separably bonded to each other through said laminated film, wherein both surfaces of said laminated film are formed as adhesive surfaces which can be inseparably bonded to said sheet portions, said laminated film includes two synthetic resin films which can be torn apart, and said two synthetic resin films are separably bonded to each other.

7. A laminated film for being interposed in sheets of paper having at least two sheet portions which can be folded such that the inside each-other-facing surfaces of said sheet portions are separably bonded to each other through said laminated film, , comprising;

said two synthetic resin films which can be torn apart,

said weak adhesive which is provided between the films; and

said synthetic resin layers which are respectively provided on the outer surfaces of the films through said strong adhesives.

8. A laminated film for being interposed in a sheet of paper as set forth in one of claim 6 or 7, wherein said film which can be torn apart is a biaxialy oriented polypropylene film which can be torn in one direction.

9. A laminated film for being interposed in a sheet of paper as set forth in one of claim 7 or 8, wherein said synthetic resin layer is formed of an ethylene-polyvinyl acetate copolymer resin.

# F I G. 1

# F I G. 2

# FIG.3(a)

# FIG.3(b)

FIG.4

# FIG. 5

FIG. 6

7

7

FIG.7

B

10a

11

10

9

B

# FIG. 8

12

10b

# FIG.9

2    3    10a    10

4    3    5    1    10b

# FIG.10(a)

# FIG.10(b)

# FIG.11

# FIG.12

# FIG.13

# FIG.14
## PRIOR ART

12  11    13    14

13  11    14

# FIG.15
## PRIOR ART

11  13  15a  15  16  12

11  13  15b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-0 458 024 (KABUSHIKI KAISHA CHALLENCE FIVE) * column 5, line 30 - column 11, line 27; claims; figures * | 1-9 | B42D15/08 B32B7/06 |
| A | US-A-4 885 198 (KIMURA) * the whole document * | 1-9 | |
| A | EP-A-0 402 307 (SHIBAHARA, KENJI) * claims; figures * | 1-0 | |
| A | EP-A-0 374 087 (KABUSHIKI KAISHA CHALLENGE FIVE) * claims; figures * | 1-9 | |

TECHNICAL FIELDS SEARCHED (Int. Cl.5)

B42D
B32B

The present search report has been drawn up for all claims

| Place of search | Date of completion of the search | Examiner |
|---|---|---|
| THE HAGUE | 15 APRIL 1992 | DE JONGE S.J.P. |